Europäisches Patentamt

(19) European Patent Office

Office européen des brevets

(11) Publication number: **0 195 868**
**A1**

## (12) EUROPEAN PATENT APPLICATION

(21) Application number: **85309115.5**

(22) Date of filing: **13.12.85**

(51) Int. Cl.⁴: **B 26 B 13/28**

(30) Priority: **29.03.85 US 718028**
**29.04.85 US 728684**

(43) Date of publication of application: **01.10.86**
**Bulletin 86/40**

(84) Designated Contracting States: **DE FR GB**

(71) Applicant: **Evertyte Inc., 22 Maplewood Road, Closter New Jersey (US)**

(72) Inventor: **Cusato, James A., 22 Maplewood Road, Closter New Jersey (US)**

(74) Representative: **Spence, Anne et al, BARLIN HOUSE 20 High Street, Carshalton Surrey SM5 3AG (GB)**

### (54) Improved anti friction lap joint.

(57) The lap joint of this invention provides two jaw halves (10, 12) having facing finished surfaces. An internally-threaded bushing (34), is sized and adapted to be a non-rotating fit in one (lower) jaw half (12), and in the other mating (upper) jaw half (10) to provide a rotating pivot retainer. A counterbore (22), recess is formed in the upper jaw half and the inner end of the bushing extends into the counterbore. A non-metallic washer of impregnated fiber and having anti-friction properties is placed in this counterbore and a threaded retaining screw (44), is threaded and turned into the threads in the bushing. This screw is tightened so that the portion of the washer in contact with the jaw half is brought to the desired degree of tightness at and in the lap joint. During tightening, that portion of the washer between the projecting (extending) end of the bushing and screw under-surface is further compressed to provide an urging force and a resulting braking effect against loosening. Three embodiments are shown. A first embodiment has the jaw halves (10, 12) with a boss (20) and counterbore (22) at the facing surfaces (28, 30) of the jaws; a second embodiment has the jaw halves made with a straight facing surface and a third embodiment has a countersink configuration in which the retaining screw, the conical washer and the bushing are compatibly formed.

1.

## IMPROVED ANTI-FRICTION LAP JOINT

### CROSS-REFERENCE TO RELATED PATENT

This C-I-P application includes the drawings and description of the Application Serial Number 718,068, as filed March 29, 1985 by the Applicant of this Application. To the extent applicable, this invention relates to U.S. Patent 4,478,532 to PURO, as issued October 23, 1984, and to the Assignee of this invention. This patent is directed to and toward box-joint tools whereas the present invention is directed to an (scissors) joint for plier and cutting-type tools.

### BACKGROUND OF THE INVENTION
### FIELD OF THE INVENTION

The classification of art as established in and by the United States Patent Office is believed to place this invention in the general class entitled "CUTLERY" (Class 30) and in the subclasses therein pertaining to cutting tools and joint blade tensioning means and particularly with friction-reducing feature. This invention is particularly directed to lap joint- (scissors) type tools and

0195868

2

with making the joint with a selected tension with an anti-loosening means.

DESCRIPTION OF THE PRIOR ART

A careful pre-Ex search was made in the accumulated patents in the probable subclasses pertaining to a lap- (scissors) type joint using an anti-friction washer to reduce friction while providing anti-loosening means. Three pertinent patents are noted and are typical of many in the several subclasses. U.S. Patent No. 1,633,441 to FIRTH, as issued June 21, 1927, illustrates a joint using a threaded bushing and a ball recess, with the balls providing a reduced friction. U.S. Patent No. 3,289,296, as issued to HEDSTROM et al. utilizes a threaded bushing which provides a pivot means and a screw and washer which allow a tapered washer to be drawn into the desired frictional engagement while loosening of the screw joint is minimized. U.S. Patent No. 3,672,053 to WISS, as issued June 27, 1972, utilizes a bushing and a "Belleville" -type washer to provide the desired tension. This bushing is longitudinally movable as tightening is effected.

Applicant's invention provides a simple lap joint and the tolerances are commercially acceptable with only the differential in the length of the bushing and the depth of the counterbore pertinent to the desired action of the pivot joint. The anti-friction washer, whether flat or conical, is of relatively thin configuration and th escrew, as it is tightened, not only provides the desired tightness in the joint, but also provides an anti-loosening capability as the washer is compressed.

SUMMARY OF THE INVENTION

This invention may be summarized, at least in part, with reference to its object.

It is an object of this invention to provide, and it does provide, an adjustably-tightened pivot screw particularly used with lap- or scissors-type tools such as cutters, pliers and the like. This lap joint is shown with three modes of construction. In a first mode, a lap joint employs two shank members with a female half having a counterbore or recess into which a boss portion on a mating male shank half seats in and provides a rotary alignment of the shank halves. A pivot bushing is mounted in a bore extending through both halves and projects a short distance such as two- to six-thousandths of an inch into the space below the screw head so that an anti-friction washer, when and as tightened into place by the screw, urges this portion of the washer at the end of the bushing to provide an anti-loosening capability while the rest of the washer provides the anti-friction properties desired in the joint.

It is a further object of this invention to provide, and it does provide, a second mode, in which an adjustably-tightened pivot screw particularly used with lap- or scissors-type tools, with this lap joint employing two substantially like shank members, each with an external counterbore, and at the mating interior surfaces finished to provide minimum rotary friction. Each shank member has a through bore extending from the counterbore to the mating surface and a pivot bushing is mounted in said through bore and extends through both halves and projects a short distance such as two- to six-thousandths of an inch into the space below the screw head so that an anti-friction washer, when and as tightened into place by the screw, urges this portion of the washer at the end of the bushing to provide an anti-loosening capability while the rest of the washer provides the anti-friction properties desired in the joint.

It is a further object of this invention to provide, and it does provide, a third mode substantially like the second mode, but with the underside of the pivot screw formed as a male tapered portion, with the mating and receiving jaw shank having a female countersink of a like angle. The top end of the pivot bushing is likewise countersunk at the same angle. The washer is made with a cone-like configuration and angle.

In brief, this lap joint, although shown in three embodiments, is provided with a threaded bushing that is a press fit into a counterbored through aperture in a shank half. In a first embodiment, this shank half is called a female half and has a counterbore or recess which is sized to provide a shoulder retainer for the rotating

6

movement of a mating male shank half. This male shank half has a bore sized to be a rotating fit on the stem of the bushing and has a boss sized to fit within the counterbore on the female half. Preferably, this shank half also has an external counterbore sized to receive a large head of a securing screw and an anti-friction washer carried thereunder. The threaded bushing extends from the bottom through both halves of the jaws forming the lap joint and protrudes about two- to six-thousandths of an inch into the area occupied by the impregnated fiber washer. This bushing shank is of a diameter sufficient to provide the formatin of internal threads for the retaining screw. This protruding end of the bushing provides only a thin engaging ring, but as it enters the underside of the washer provides a brake to the unwanted turning movement of the retaining screw when tightened into a desired adjusted condition. The washer is usually of a fiber material with anti-friction plastic material added or impregnated. A known material is Teflon (TM of DuPont). This washer is seated in a counterbore in the half providing a seat for the head of the screw. The screw is tightened to bring the halves forming the lap joint to little or no play.

In a second embodiment, as depicted, the jaw halves are substantially identical, at least as to thickness and shape. This lap joint does not have a boss and counterbore at the interior of the jaw halves. The bottom jaw is shown with a counterbore, a through bore for the mounting therein of a flanged and internally-threaded bushing which is a press fit in the through bore. The mating upper jaw half also has a counterbore sized to receive and retain the head of a securing screw and washer. The threaded bushing extends from the bottom through both halves of the jaws forming the lap joint and protrudes about two- to six-thousandths of an inch into the area occupied by the impregnated fiber washer. This bushing shank is of a diameter sufficient to provide the formation of internal threads for the retaining screw. This protruding end of the bushing provides only a thin engaging ring, but as it enters the underside of the washer provides a brake to the unwanted turning movement of the retaining screw when tightened into a desired adjusted condition.

In a third embodiment, as depicted, the jaw halves are substantially identical, at least as to thickness and exterior configuration. As in the second embodiment, this lap joint is with flat contiguous facing surfaces. The bottom jaw is shown with a counterbore, a through bore for the mounting therein of a flanged and internally-threaded bushing which is a press fit in the through bore. The mating upper jaw half also has a counterbore whose bottom surface is a female taper at substantially a countersink angle and sized to receive and retain a conically-shaped washer. The threaded bushing has its upper end preferably countersunk at about the determined angle. The threaded bushing extends from the bottom through both halves of the jaws forming the lap joint and protrudes into the formed countersink in the upper jaw half about two- to six-thousandths of an inch and into the area or space occupied by an impregnated conical washer. The bushing shank is of a diameter sufficient to provide the formation of internal threads for the retaining screw. The protruding end of the bushing provides only a thin engaging ring, but as it comes in way of the tapered underside of the screw, the washer portion therebetween is compressed as and when the retaining screw is tightened into a desired adjusted condition.

In addition to the above summary, the following disclosure is detailed to insure adequacy and aid in understanding of the invention. This disclosure, however, is not intended to cover each new inventive concept no matter how it may later be disguised by variations in form or additions of further improvements. For this reason, there have been chosen three specific embodiments of the improved lap joint employing a screw-type pivot pin as adopted for use in maintaining a tightness in the joint and showing a preferred means for constructing said pivot. These specific embodiments have been chosen for the purposes of illustration and description as shown in the accompanying drawings wherein:

## BRIEF DESCRIPTION OF THE DRAWINGS

FIG. 1 represents a plan or top view of a lap joint in an assembled condition;

FIG. 2 represents a side sectional view of the lap joint of FIG. 1 and diagrammatically showing the interrelationship and assembly of the several components;

FIG. 3 represents an exploded isometric view of a washer and a bushing insert providing the pivot spindle means;

FIG. 4 represents a plan or top view of a lap joint of an alternate jaw configuration, this joint depicted in a assembled condition;

FIG. 5 represents a side sectional view of the lap joint of FIG. 4 and diagrammatically showing the interrelationship and assembly of the several components of this alternate configuration;

FIG. 6 represents a plan or top view of a lap joint of yet another alternate jaw configuratin, this joint depicted in an assembled condition;

FIG. 7 represents a side sectional view of the lap joint of FIG. 6 and diagrammatically showing the securing screw, the washer, and a countersink of the jaw and bushing of a like angle, and

FIG. 8 represents an exploded isometric view of a conically-shaped washer and a bushing, with the top end of the bushing formed with a countersink.

In the following description and in the claims, various details are identified by specific names for convenience. These names are intended to be generic in their application. Corresponding reference characters refer to like members throughout the several figures of the drawings.

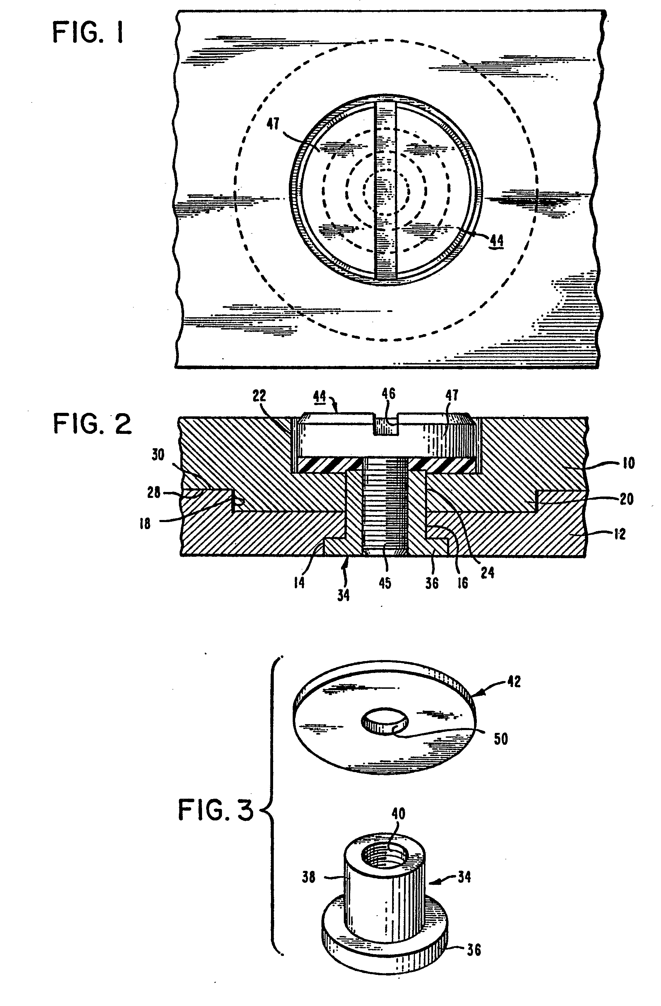

DESCRIPTION OF FIGS. 1 THROUGH 3

Referring next to the drawings and the lap joint as shown in FIGS. 1, 2 and 3, it is noted that upper jaw half 10 and lower jaw half or member 12 are present. This lap joint may be used effectively for scissors of good quality, pliers, cutters and tools wherein precision of rotation and retention of adjusted tension are desired and maintained. The lap (scissors) joint of this invention contemplates that one of the jaw members (and as depicted is the lower jaw member 12) is formed with a counterbore 14 of a determined diameter and depth. A thourgh bore 16 is also formed in the remaining portion of this jaw member. Another counterbore 18 is formed in the top surface of said jaw 12.

The mating jaw member 10 (upper as depicted) is formed with a boss portion 20 which seats in the counterbore 18, but this boss portion is sized so as to not engage the sides and bottom of this counterbore 18. As viewed, said upper jaw member 10 has a counterbore 22 of a determined diameter and depth. This counterbore 22 has the same axis as through bore 24 which is slightly larger in diameter than through bore 16. Each facing surface 28 and 30, of the two jaws where they rub each other, is made with a finish commensurate with good quality tools of metal such as stainless steel. This surface finish, as by grinding, sanding, etc., conventionally does not retain dust or dirt. A shouldered bushing, generally identified as 34, has a shoulder end 36 that is sized and adapted to enter and be retained within the counterbore 14. The outer diameter of shank portion 38 is a tight or interference fit in the through bore 16. This same upper diameter shank portion is a turning fit with the through bore 24 as formed in member 10.

Within the bushing 34 is formed a thread 40 which conventionally is No. eight or ten having thirty-two threads per inch, but size has no patentable distinction ascribed thereto. A flat washer 42 is placed in the counterbore 22 and a flat head (pan head) screw 44 whose threaded shank portion 45 is turned into the threaded portion 40 in bushing 34 and is mounted therein. A screwdriver slot 46 in head 47 is shown as a means for rotating the screw 44 into a desired tightened condition where little or no play between surfaces 28 and 30 is found. The washer 42 is preferably made from a fiber material with additional material such as Teflon or the like which, as a component of manufacture, provides a low coefficiency of friction. As the head 47 of screw 44 is rotated to and into a retaining condition, the small portion of the washer 42 that rests upon the projecting end portion of bushing 34 further is tightly engaged, causing the washer 42 to be compressed to effectively provide a brake against unwanted turning or loosening of the screw 44.

The washer is usually about thirty- to sixty-thousandths of an inch in thickness and inner hole 50 (FIG. 3) is sized to slide over or along the shank 45 of screw 44 so that the projecting end of bushing 34 engages that portion of the washer between the screw and bushing. This brake action does not preclude the user of the tool from making adjustments either loosening or tightening the joint. The washer 42 is made or formed of composite fiber or treated fiber. The material usually used is treatd or has an included portion of anti-friction material such as Teflon, but absent "cold flow" tendencies, and although with anti-friction properties, is relatively stable sizewise, although is compressed.

The lap joint depicted in FIG. 2 shows the shoulder end 36 of the bushing 34 as flush or slightly inner the outer surface of jaw member portion 12, but this is only cosmetic and not a patentable distinction. In the same manner, the head 47 of screw 44 and the counterbore 22 for the washer 42 and screw head are constructed so as to be more or less flush with the outer surface of jaw member 10. The boss 20 and counterbore 18 therefor are a matter of preference and patentable distinction is not ascribed thereto. The head 47 of screw 44 is made sufficiently large so that, with the head in a recess condition, the slot 46 may be entered by a screwdriver (not shown) for turning adjustment at any time. Recess (counterbore 22) is sized to provide clearance for the desired turning of the pan head 47. The bushing 34 is depicted with a through bore and thread as such a bushing is more easily produced, but a bushing with a closed bottom end is not precluded. What is novel is the providing of a bushing in which the shank portion is made slightly longer than the extent of lap positioned jaw members so that a projection of the bushing is provided for the engagement of a washer positioned between the screw head and end of the bushing. This ring-like end portion of the washer, when compressed, provides a brake against unwanted turning or loosening of the screw 44. The depth of the counterbores 14, 18 and 22 is a matter of selection and designer preference. The bushing 34 and the head 47 of the screw 44 and their positioning above or below the exterior surfaces of the jaws are also merely a matter of preference.

This showing depicts the lap joint and does not show handles or jaw ends as there are many such designs and configurations used in and with lap joint tools. The showing in FIG. 2 has the bushing shank 36 about equally disposed between jaw portion halves, but this is merely a selected depiction. The screw slot 46 is shown as made sufficiently wide for the use of a small coin such as a dime or penny, but the pan-head screw 44 may have a Phillips screwdriver slot or other means and no patentable distinction is ascribed thereto. The bushing 34 is depicted with a flange 36, which is a practical means of establishing a precise limit stop. It is, of course, realized that a bushing could be made without a shoulder, with the interference fit used to establish projection and retention. The dependence on such manufacturing tolerances is avoided by the exemplified lap joint.

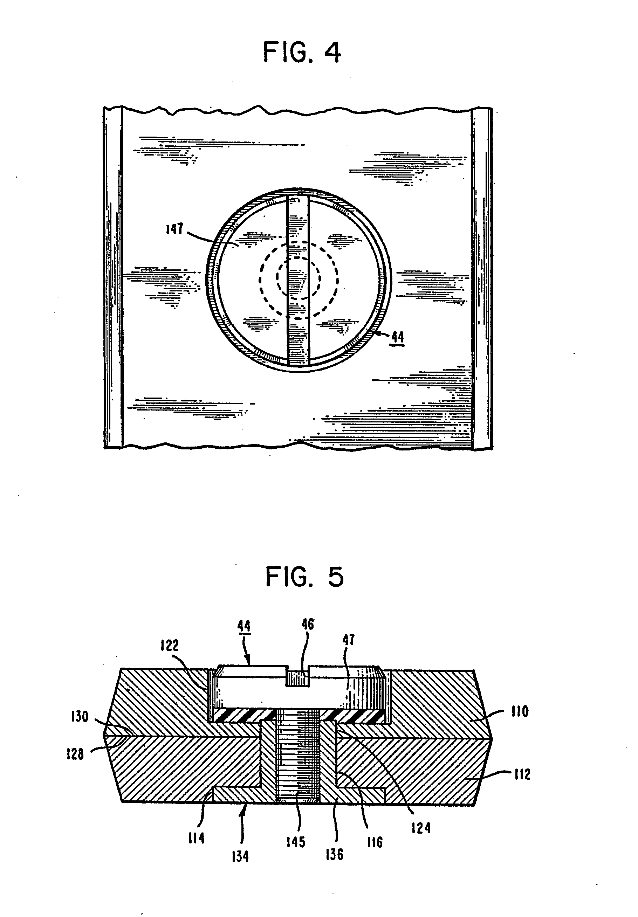

EMBODIMENT OF FIGS. 4 AND 5

Still referring to the drawings and particularly to the embodiment showing FIGS> 4 and 5, it is to be noted that the jaw halves are made of like forgings or castings. Upper jaw 110 and lower jaw 112 are made of and with probable like configurations, with the facing surfaces 128 and 130 finished to provide smoothly engaging surfaces. Preferably, upper and lower jaw halves are formed with through bores 124 and 116, with bore 116 having a counterbore 114 sized and adapted to receive and retain a shoulder end or flange portion 136 of an internally-threaded bushing or insert 134. Said bushing 134 has a shank portion 138 which is a non-rotating fit in the through bore portion 116 of the lower jaw 112. The through bore 124 of the jaw 110 is slightly larger and sized to be a slip or slide fit on stem diameter 136 of the bushing.

The upper jaw portion 110 is counterbored at 122 to provide a seating recess for the washer 42 and retaining screw 44, as in FIG. 2 described above. As reduced to practice, the diameter of the bushing flange or shoulder end 136 is about three hundred-thousandths of an inch whereas the diameter of the counterbore 122 in the upper jaw member 110 is about three-eighths of an inch for a screw head slightly greather than five-sixteenths of an inch. The mounted bushing 134, like the bushing in FIG. 2, is also anticipated to extend into counterbore recess 122 about two- to six-thousandths of an inch. As the washer 42 is placed in counterbore 122 and the shank 45 of the screw 44 is passed through hole 50 and into the threaded portion 40, said screw is rotated into position and tightened to bring the jaw surfaces 128 and 130 into the desired frictional arrangement. The small projecting ring portion of bushing 134 engages that washer portion between the under-surface of the head 47 of screw 44 so that additional compression occurs. This additional compression exerts the "braking" effect on the unwanted loosening rotation of the screw.

The screw 44, washer 42 and the use and operation of this lap joint are like that described in conjunction with FIGS. 1 through 3, but are directed to lap joints wherein the jaw members usually are made from a single die or mold and until finishing are alike. It is to be noted that the jaw halves as to configuration and thickness may be made to suit the tool to be supplied, but the small projection of the bushing into the counterbore for the washer and screw allows the washer to be compressed to provide a "braking effect or result". The washer is usually of an impregnated fiber, but this is not intended to be restrictive as any washer that provides recovery ability and has a spring-like capability is acceptable. Plastic material that has a tendency toward "cold flow" and has little or no recovery does not provide the desired "braking" effect. Bushings having outward engaging ribs or means for fixed mounting in the through bore in the lower jaw are also contemplated, but the bushing shank in the upper jaw through bore must provide the desired turning capability and journal force structure.

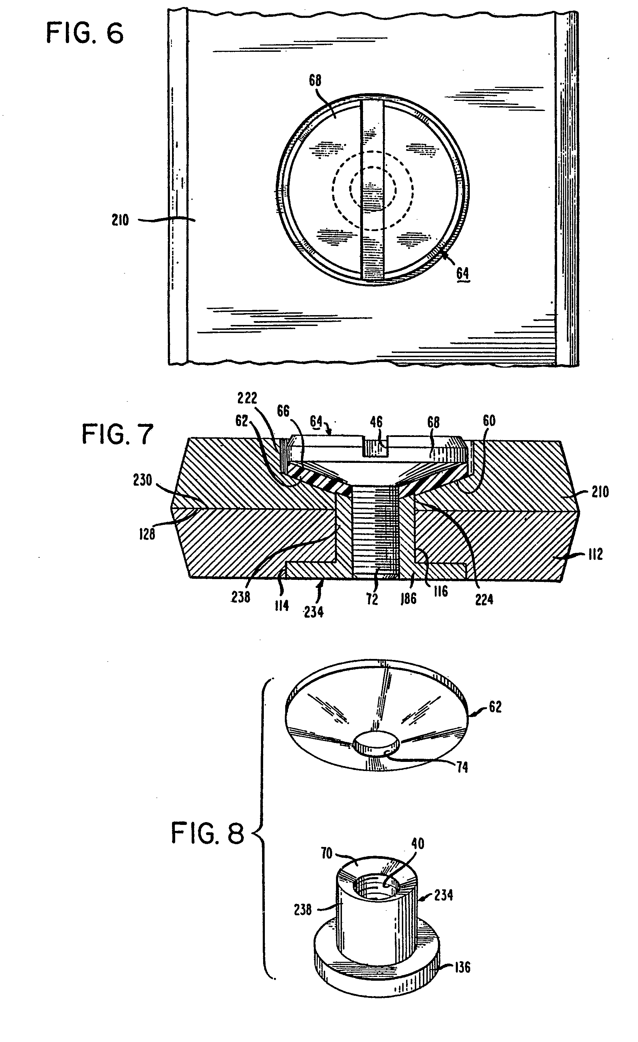

EMBODIMENT OF FIGS. 6, 7 AND 8

Referring next, and finally, to the drawings and particulary to this alternate embodiment, which is a variation on the embodiment of FIGS. 4 and 5, it is to be noted that the jaw halves are made of like forgings or castings. Upper jaw 210 and lower jaw 112 are made of and with probable like configurations, with the facing surfaces 128 and 230 finished to provide smoothly engaging surfaces. Preferably, upper and lower jaw halves are formed with through bores 224 and 116, with bore 116 having a counterbore 114 sized and adapted to receive and retain a shoulder end or flange portion 186 of an internally-threaded bushing or insert 234. Said bushing 234 has a shank portion 238 which is a non-rotating fit in the through bore portion 116 of the lower jaw 112. The through bore 224 of the jaw 210 is slightly larger and sized to be a slip or slide fit on stem diameter 238 of the bushing.

The upper jaw portion 210 is counterbored at 222 for a short distance and then is countersunk at a determined angle such as one hundred ten degrees. This countersink area is identified as 60 and provides a seating recess for a conical washer 62 which has a thickness of about one thirty-second to one-sixteenth of an inch and is constructed as described above. A retaining screw 64 has its underside formed with a male protruding angle 66 which is at the same angle as countersink 60. As reduced to practice, the diameter of the bushing flange or shoulder end 136 is about three hundred-thousandths of an inch whereas the diameter of the counterbore 222 in the upper jaw member 210 is about three-eighths of an inch for a screw head 68 sligthly greater than five-sixteenths of an inch. The mounted bushing 234, like the bushing 34 in FIG. 2, is also anticipated to extend into countersink recess 60 about two- to six-thousandths of an inch. The pivot bushing 234 has its upper end of stem 238 formed with a countersink 70, which angle conforms to the angle 66 on the retaining screw 64. The conical washer 62 is placed in the counterbore-countersink with the angle considered so that the washer seats on the countersink portion 60. Threaded shank portion 72 of screw 64 passes through aperture 74 in washer 62 and into threaded portion 40 of bushing 234. Said screw is rotated into position and tightened to bring the jaw surfaces 128 and 230 into the desired frictional arrangement. The small projecting end portion 238 of bushing 234 engages that washer portion between the under surface of the head 66 of screw 64 so that additional compression occurs. This additional compression exerts the "braking" effect on the unwanted loosening rotation of the screw. The assembly of the lap joint as shown in FIG. 7 illustrates that the countersink be formed to the root of the thread on the securing screw, but it is also contemplated that a small flat may be formed on the screw 64 and the washer 62 be formed to the shape of the underside of the screw. If such a flat surface is provided, the bushing of FIG. 5 may be used.

The screw 64, washer 62 and the use and operation of this lap joint are like that described in conjunction with FIGS. 4 and 5 above, but are directed to lap joints wherein the jaw members usually are made from a single die or mold and until finishing are alike. It is to be noted that the jaw halves as to configuration and thickness may be made to suit the tool to be supplied, but the small projection of the bushing into the counterbore for the washer and screw allows the washer to be compressed to provide a "braking" effect or result. The washer is usually of an impregnated fiber, but this is not intended to be restrictive as any washer that provides recovery ability and has a spring-like capability is acceptable. Plastic material that has a tendency toward "cold flow" and has little or no recovery does not provide the desired "braking" effect.

Terms such as "up," "down," "bottom," "top," "front," "back," "in," "out" and the like are applicable to the embodiments shown and described in conjunction with the drawings. These terms are

0195868

24

merely for the purposes of description and do not necessarily apply to the position in which the lap joint tool may be constructed or used.

While particular embodiments of the lap joint construction for tools such as scissors, pliers and cutters have been shown and described, it is to be understood that the invention is not limited thereto and protection is sought to the broadest extent the prior art allows.

## CLAIMS

1.  An improved anti-friction lap joint for jaw halves (10, 12, 110, 112, 210) used in and with pliers, tools, scissors and the like, said lap joint utilizing an anti-friction washer (42, 62) to reduce turning friction while compressing a small ring-like portion of said washer to provide a brake force against unwanted loosening of a retaining screw (44, 64) said lap joint including:

    (a)  upper and lower jaw halves (10, 12, 110, 112, 212) adapted and arranged in an overlaid position with the facing surfaces (28, 30, 128, 130, 230) of the jaw halves around a pivot joint finished to provide a minimum turning resistance, each jaw half having a formed through bore (16, 24, 116, 124, 224);

    (b)  an internally-threaded bushing (34, 134, 234) sized to provide a non-rotating fit in the lower jaw half bore (16, 116) and a rotating fit in the upper jaw half bore (24, 124, 224), said bushing having a defined length;

    (c)  a counterbore (22, 122, 222) formed in the upper jaw half (10, 110, 210) and open to the outside one end of the bushing (34, 134, 234) projecting into the counterbore a predetermined distance;

(d) a non-metallic fiber washer (42, 62) positioned within the counterbore, the washer having anti-friction properties and size to provide a slip fit in the counterbore (22, 122, 222), the washer having a central hole (50, 74) sized provide a slide fit on a threaded shank (45, 145, 72) of a retaining screw (44, 64); and

(e) a large-headed retaining screw (44, 64), such as a pan-headed screw, with means for rotating (46) and having a threaded shank (45, 145, 72) adapted to enter in the threaded bushing (34, 134, 234) whereas and as the washer (42, 62) is placed over the threaded shank of the screw and said screw is rotated into retaining condition, that portion of the washer in contact with the upper jaw (10, 110, 210) provides the desired tightness of the lap joint and that portion of the washer between the projecting one end of the bushing (34, 134, 234) and screw under-surface is further compressed to provide an urging force and a resulting braking effect against loosening of the screw.

2. A lap joint, as in claim 1, in which the lower jaw (12, 112) is formed with a counterbore (14, 114) sized to receive and retain a shouldered end (36, 136, 186) formed on the internally-threaded bushing (34, 134, 234) and, when the shoulder of the bushing is contiguously mounted in said counterbore, the protruding one end of said bushing extends into the counterbore (22, 122, 222) in the upper jaw (10, 110, 210).

3. A lap joint, as in claim 1, in which jaws are very similar in forging or casting and have like side configurations.

4. An improved anti-friction lap joint for jaw halves (10, 12) used in and with pliers, tools, scissors and the like, said lap joint utilzing an anti-friction washer (42) to reduce turning friction while compressing a small ring-like portion of said washer to provide a brake force against unwanted loosening of a retaining screw (44), said lap joint including:

(a) upper and lower jaw halves (10, 12) adapted and arranged in an overlaid position, with the facing surfaces of the jaw halves around a pivot joint finished to provide a minimum turning resistance, each jaw half having a formed through bore (16, 24);

(b) an internally-threaded bushing (24) sized to provide a non-rotating fit in the lower jaw half bore (16) and a rotating fit in the upper jaw half bore (24), said bushing having a defined length;

(c) a first counterbore (22) formed in the upper jaw half (10) and open to the outside and into this counterbore one end of the bushing (34) projects a predetermined distance;

(d) a non-metallic fiber washer (42) having anti-friction properties and sized to provide a slip fit in the first counterbore (22), the washer (42) having a central hole (50) sized to provide a slide fit on a threaded shank (45) of a retaining screw (44);

(e) a second counterbore (18) formed in the lower jaw half (12) and opening toward the upper jaw half (10), the second counterbore (18) of a greater diameter than the first counterbore (22) and having a depth adapted to reduce a portion of the thickness of the lower jaw half (12) proximate the internally-threaded bushing (24) and the upper jaw half (10) formed with a boss (20) adapted to enter the second counterbore (22) in the lower jaw half (10), the boss (20) sized to provide a turning fit in the second counterbore (22) and having a projection corresponding to the depth of said second counterbore (22); and

(f) a large-headed retaining screw (44), such as a pan-headed screw, with means (46) for rotating and having a threaded shank (45) adapted to enter in the threaded bushing (24) whereas and as the washer (42) is placed over the threaded shank (45) of the screw (44) and said screw is rotated into retaining condition, that portion of the washer (42) in contact with the upper jaw half (10) provides the desired tightness of the lap joint and that portion of the washer (42) between the projecting one end of the bushing (24) and screw under-surface is further compressed to provide an urging force and a resulting braking effect against loosening of the screw.

5. A lap joint, as in claim 4, in which the lower jaw half (12) is formed with a counterbore (14) sized to receive and retain a shouldered end (36) formed on the internally-threaded bushing (34) and, when the shoulder of the bushing is contiguously mounted in said counterbore, the protruding one end of said bushing (34) extends into the first counterbore (22) in the upper jaw half (10).

6. An improved anti-friction lap joint for jaw halves (112, 210) used in and with pliers, tools, scissors and the like, said lap joint utilizing an anti-friction washer (62) to reduce turning friction while compressing a small ring-lie portion of said washer to provide a brake force against unwanted loosening of a retaining screw (64), said lap joint including:

(a)   upper and lower jaw halves (112, 210) adapted and aranged in an overlaid position with the facing surfaces (128, 230) of the jaw halves around a pivot joint finished to provide a minimum turning resistance, each jaw half having a formed through bore (116, 224);

(b)   an internally-threaded bushing (234) sized to provide a non-rotating fit in the lwoer jaw half (112) bore (116) and a rotating fit in the mating upper jaw half bore (224), said bushing having a defined length;

(c)   a combined counterbore (222) and countersink (60) formed in the upper jaw half (210) and open to the outside and into this combined counterbore and countersink one end of the internally-threaded bushing 234 projects a predetermined distance;

(d)   a conically-shaped washer (62) having an angular slope substantially like and compatible with the slope of the countersink (60) formed in the upper jaw half (210), the washer (62) formed of a fiber having anti-friction properties and sized to provide a slip fit in the combined counterbore and countersink, the washer having a central hole (74) sized to provide a slide fit on a threded shank (72) of a retaining screw (64); and

(e) formng a retaining screw (64) with a head portion (68) on which the underside of this head portion is formed as a male conical surface (66) with an angular slope substantially like the countersink (60) in the upper jaw half, the screw head having means (46) for imparting rotation and with the threaded shank portion (72) adapted to engage the threads in the threaded bushing (234) whereas and as the washer (62) is placed over the threaded shank of the screw and said screw is rotated into retaining condition, that portion of the washer in contact with the upper jaw half (210) provides the desired tightness of the lap joint and that portion of the washer (62) between the projecting one end of the bushing (234) and screw under-surface (66) is further compressed to provide an urging force and a resulting braking effect against loosening of the screw.

7. An improved anti-friction lap joint for jaw halves, as in claim 6, in which the projecting one end of the bushing is also formed with a countersink (70) having about the same angle as the underside (66) of the retaining screw (64).

8. An improved anti-friction lap joint for jaw halves, as in claim 7, in which the internally-threaded bushing (234) also is formed with a flange portion (136) and the lower jaw half (112) is formed with a counterbore (114) providing a seating and positioning recess for the bushing (234).

0195868

1/3

FIG. 1

FIG. 2

FIG. 3

FIG. 4

FIG. 5

FIG. 6

FIG. 7

FIG. 8

0195868

Application number

# European Patent Office

## EUROPEAN SEARCH REPORT

EP 85 30 9115

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-C- 697 683 (VORBRÜGGEN) <br> * figure 2 * | 1,4,6 | B 26 B 13/28 |
| Y | DE-A-3 141 551 (RAU) <br><br> * figures 1, 2 * | 1,2,4, 5 | |
| Y | DE-U-8 137 176 (JAGUAR STAHLWAREN VERTRIEBSGESELLSCHAFT) <br> * figure 2 * | 1,2,4-6 | |
| Y | DE-U-8 321 307 (OMEGA-WERK HARTMANN & CO.) <br> * figure 2 * | 1 | |
| Y | DE-U-8 409 858 (FRITZ BRACHT et al.) <br> * figure 2 * | 1 | TECHNICAL FIELDS SEARCHED (Int. Cl.4) <br><br> B 26 B 13/28 <br> B 25 B 7/06 <br> F 16 B 39/24 <br> F 16 B 5/02 <br> F 16 B 29/00 |
| Y | CH-A- 548 823 (J. WISS & SONS) <br> * figures 12-15 * | 1 | |
| Y | US-A-1 616 232 (ROBERTS et al.) <br> * figure 1 * | 1 | |
| Y | US-A-2 650 845 (DALLEY) <br> * figure 3 * | 1 | |

The present search report has been drawn up for all claims

| Place of search | Date of completion of the search | Examiner |
|---|---|---|
| BERLIN | 22-05-1986 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82